Europäisches Patentamt

European Patent Office

Office européen des brevets

(11) Veröffentlichungsnummer : **0 034 150**
**B1**

(12) **EUROPÄISCHE PATENTSCHRIFT**

(45) Veröffentlichungstag der Patentschrift :
01.06.83

(51) Int. Cl.³ : **G 21 F 5/00**

(21) Anmeldenummer : **80901393.1**

(22) Anmeldetag : **01.08.80**

(86) Internationale Anmeldenummer :
**PCT/CH 80/00093**

(87) Internationale Veröffentlichungsnummer :
**WO WO/81006 (05.03.81 Gazettee 81/06)**

(54) TRANSPORTBEHÄLTER FÜR RADIOAKTIVES MATERIAL.

(30) Priorität : 20.08.79 CH 7593/79

(43) Veröffentlichungstag der Anmeldung :
26.08.81 Patentblatt 81/34

(45) Bekanntmachung des Hinweises auf die Patenterteilung : 01.06.83 Patentblatt 83/22

(84) Benannte Vertragsstaaten :
AT CH DE FR GB LI

(73) Patentinhaber : **ELEKTROWATT INGENIEURUNTER-
NEHMUNG AG**
**Bellerivestrasse 36**
**CH-8008 Zürich (CH)**

(72) Erfinder : **DOROSZLAI, Pal**
**Hirschengasse 21**
**CH-5416 Kirchdorf (CH)**
Erfinder : **FERRONI, Ferruccio**
**Holzwiesweg 33**
**CH-8047 Zürich (CH)**

(74) Vertreter : **Schmid, Rudolf et al**
**c/o ISLER & SCHMID Patentanwaltsbureau Walchestrasse 23**
**CH-8006 Zürich (CH)**

(56) Entgegenhaltungen :
DE A 2 005 944
DE A 2 221 610
DE A 2 459 697
FR A 1 568 340
FR A 1 586 456
FR A 2 113 805
FR A 2 140 606
FR A 2 215 675
FR A 2 258 692
FR A 2 334 177
US A 3 619 616

(56) Entgegenhaltungen :
US A 3 886 368
US A 3 962 587
POWER, Band 114, Nr. 2, veröffentlicht im
Februar 1970, (New York, US) A.L. Cohen : « Shipping Cask Can Accommodate Various Nuclear
Fuel », siehe Seite 90, ganz
ENERGIA NUCLEARE, Band 24, Nr. 7, veröffentlicht im Juli 1977 (Mailand IT) F. Bregani et al. :
« Progetto di un contenitore per il trasporto di
combustibile nucleare irraggiato », Seiten 379-
389

Transportbehälter für radioaktives Material

Die Erfindung betrifft einen zylindrischen Behälter für den Transport bestrahlter Reaktorelemente, wobei am Behälter unten und oben doppelschalig ausgebildete, nach aussen gewölbte Stossdämpfer montiert sind, die mit einem energieabsorbierenden Material gefüllt sind.

Transportbehälter für radioaktive Materialien müssen so ausgelegt werden, dass auch beim schwerwiegendsten anzunehmenden Unfall der Verlust von radioaktiven Stoffen mit Sicherheit vermieden wird. Als Unfälle in diesem Sinne kommen in Frage :
— freier Fall des Behälters (z. B. von einem Transportfahrzeug) und senkrechter oder seitlicher Aufprall auf eine harte, unnachgiebige Unterlage
— Brände
— Untertauchen in Wasser.

Um solche Unfälle schadlos zu überstehen werden bekannte Behälter aus einem massiven geschmiedeten Stahlzylinder hergestellt, der unten und oben dicht verschlossen ist. Der massive Stahlkörper hält die Gammastrahlung ab. Zur Abschirmung der Neutronenstrahlung ist der Behälter mit einem Aussenmantel versehen, der eine Wasserfüllung einschliesst.

Seitliche Kühlrippen dienen einerseits der Wärmeabgabe und anderseits dazu, beim seitlichen Aufprall des Behälters Energie zu absorbieren. An den Enden des Behälters können Stossdämpfer montiert sein, die sowohl als Neutronenschirm wie auch für die Energieabsorption Verwendung finden.

Ein gattungsgemässer Behälter ist aus der FR-A 1.568.340 bekannt. Der Behälter ist unten und oben mit doppelschalig ausgebildeten, gewölbten Stossdämpfern versehen, die im Innern mit Holz gefüllt sind.

Bei einem weiteren bekannten Behälter gemäss der US-A 3.886.368 sind zylindrische, mit Balsaholz gefüllte Stossdämpfer vorgesehen. Die Fasern des Holzes sind parallel zur Achsrichtung des Behälters ausgerichtet, um in dieser Richtung, d. h. bei einem senkrechten Fall die grösste Energie absorbieren zu können.

In der Praxis hat es sich gezeigt, dass bei den bekannten Behältern insbesondere die energieabsorbierenden Eingenschaften beim Aufprall ungenügend sind. Je nach Fallwinkel und Aufprallage können ungleichmässige Verzögerungswerte mit lokal sehr hohen Verzögerungsspitzen auftreten, die zu einer gefährlichen Beschädigung der Behälter führen können.

Zweck der vorliegenden Erfindung ist es, diese Nachteile zu beheben und einen Transportbehälter zu schaffen, dessen Energieabsorptions-Eigenschaften beim Aufprall in allen Richtungen wesentlich gleichmässiger sind.

Diese Aufgabe wird so gelöst, dass die Stossdämpfer eine Torusform aufweisen, und dass im Innern derselben in Achsrichtung verlaufende, deformierbare Rohre angeordnet sind.

Beim senkrechten Fall des Behälters wird durch das energieabsorbierende Material und die senkrechten, deformierbaren Rohre ein erheblicher Teil der Aufprallenergie vernichtet. Durch die Torusform wird eine gleichmässigere Verteilung der Deformationsarbeit erzielt, wobei diese Form auch einen Teil der Energie absorbiert, die bei einem schrägen Aufprall entsteht.

Nachstehend werden anhand der Zeichnungen Ausführungsbeispiele der Erfindung näher erläutert. Es zeigen :

Figur 1   einen Querschnitt durch einen leeren Transportbehälter für sieben bestrahlte Brennelemente,

Figur 2   einen Querschnitt durch einen weiteren Transportbehälter für siebenzehn bestrahlte Brennelemente,

Figur 3   einen Längsschnitt nach der Linie III-III durch den leeren Transportbehälter gemäss Fig. 1,

Figur 4   eine Ansicht von unten auf den Behälterboden und den aufgeschraubten Stossdämpfer gemäss Fig. 3,

Figur 5   eine Draufsicht auf den Behälterdeckel mit aufgesetztem Stossdämpfer gemäss Fig. 3,

Figur 6   einen Schnitt nach der Linie VI-VI gemäss Fig. 5,

Figur 7   einen Schnitt nach der Linie VII-VII gemäss Fig. 3,

Figur 8   einen Schnitt nach der Linie VIII-VIII gemäss Fig. 4,

Figur 9   einen Schnitt nach der Linie IX-IX gemäss Fig. 3, und

Figur 10   verschiedene Brennelemente, die im Behälter transportiert werden.

Der in den Figuren dargestellte Transportbehälter besteht im wesentlichen aus dem zylindrischen Behälterkörper 1, dem entfernbaren Tragkorb 2 für die Brennelemente, dem inneren Abschlussdeckel 3, dem äusseren Behälterdeckel 4 und den beiden, an den Behälterenden angebrachten Stossdämpfer 5, 6.

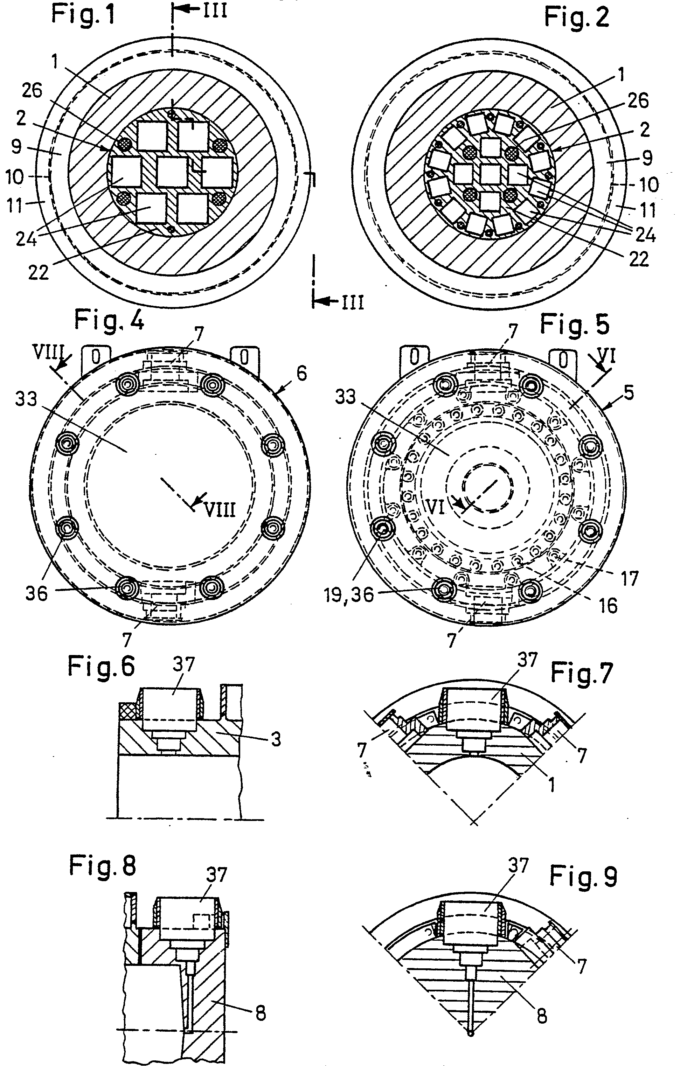

Der Innenraum des Behälters ist so konzipiert, dass verschiedene Tragkörbe 2, 21 mit unterschiedlichem Fassungsvermögen, beispielsweise sieben Brennstäbe (Fig. 1) oder siebenzehn Brennstäbe (Fig. 2) darin untergebracht werden können. Zum Heben des Behälters sind sechs Tragzapfen 7 vorgesehen, von denen vier oben und zwei unten montiert sind.

Der Transportbehälter weist einen massiven Stahlzylinder 1 auf, mit einem angeschweissten Behälterboden 8. Auf dem Stahlzylinder 1 ist der innere Abschlussdeckel 3 mittels Bolzen 16 befestigt. Der Zylinder 1, der Boden 8 und der innere Abschlussdeckel 3 sind aus Kohlenstoffstahl geschmiedet und gewährleisten eine gute Abschirmung gegenüber Gammastrahlen. Der Innenraum des Behälters und auch die äusseren Teile, die radioaktiv verseucht sein können, sind mit rostfreiem Stahlblech umhüllt.

Der zylindrische Teil des Behälters ist von einer Wasserhülle 9 ummantelt. Die Wasserhülle erstreckt sich axial zwischen den unteren und oberen Tragzapfen 7 zwecks Abschirmung der aktiven Brennelementzone aller in Frage kommenden Brennelementtypen. Das Wasser dient als Neutronenschild zur Abschirmung der schnellen Neutronen. Die äussere Ummantelung 10 der Wasserhülle weist umlaufende, ringförmige Kühlrippen 11 aus Eisen auf, die für die Wärmeübertragung vorgesehen sind und auf dem Aussenmantel 10 aufgeschweisst sind.

Am oberen Ende der Ummantelung 10 befindet sich ein ringförmiger, vom Wasser getrennter Expansionsraum 12. In diesem gasgefüllten Expansionsraum 12 sind zwei konzentrisch angeordnete Balge 13 aus rostfreiem Stahl untergebracht. Bei der Expansion des Wassers wird das Gas im Expansionsraum 12 zwischen den Bälgen 13 komprimiert. Letztere werden somit ebenfalls zusammengepresst. Der normale Betriebsdruck des Wassers beträgt etwa 2 bar. Zum Schutze des Aussenmantels 10 gegenüber zu hohem Wasserdruck sind in diesem mehrere kleinere Sollbruchscheiben angeordnet. Zum Füllen und Entleeren des Wassers sind Ventile an gegenüberliegenden Seiten am unteren Ende der Ummantelung 10 angebracht. Ein weiteres Ventil mündet in den Expansionsraum 12 zum Füllen bzw. Entleeren dieses Raumes mit dem Gas.

Die Ummantelung 10 ist unten und oben durch dicke, umlaufende Seitenrippen 14 abgeschlossen. Diese Seitenrippen 14 dienen zur Aufpralldämpfung.

Zur Temperaturkontrolle des Behälters sind Temperatursonden vorgesehen, die verschieden tief in den Behälter eindringen. Die Temperatursonden sind im wärmsten Bereich des Behälterkörpers 1 angeordnet, unmittelbar vor den Kühlrippen. Vorteilhafterweise sind die Temperatursonden in einer Röhre untergebracht und zwar so, dass für die diffuse Gammastrahlung kein direkter Weg nach aussen freigegeben ist. Die Gesamtlänge des Behälterkörpers 1 beträgt 5,29 m. Die Tiefe des Behälters, gemessen von der Fläche des Flansches 15 bis zum Behälterboden, beträgt 5,12 m. Bei aufgesetztem innereren Abschlussdeckel 3, wenn keine Distanzscheiben verwendet werden, beträgt die maximale Tiefe 4,675 m.

Die eisernen Kühlrippen 11 sind durch eine Epoxidharzschicht geschützt, welche von radioaktiven Stoffen dekontaminiert werden kann. Alle andern exponierten Teile des Behälters, mit Ausnahme der massiven rostfreien Stahlrippen 14 an den Enden des gerippten Mantelbereiches, sind entweder aus rostfreiem Stahl hergestellt oder mindestens mit einer Schicht von 3 mm dickem, rostfreiem Stahlblech abgedeckt. Dies trifft auch zu für die inneren Hohlflächen des Behälters. Die Abdeckung wird im Schweissverfahren aufgebracht.

Der Transportbehälter ist aus Sicherheitsgründen zweifach verschlossen. Zur Verschliessung des Behälters dienen der innere Abschlussdeckel 3 mit dem Ringflansch 15 und den Befestigungsbolzen 16, der äussere Behälterdeckel 4 mit den Befestigungsbolzen 17, drei nicht näher dargestellte metallische O-Ringe und der Flansch 18 mit Bohrungen für die Befestigungsbolzen 19 der Stossdämpfer 5, 6. Am inneren Abschlussdeckel 3 können verschiedene Abstandsbegrenzungsscheiben angebracht werden, damit die Grösse des Behälterinnenraumes den verschiedenen, zu transportierenden Brennerstäben angepasst werden kann. Der innere Abschlussdeckel 3 und die an ihm mittels Bolzen befestigten Abstandsbegrenzungsscheiben bilden eine integere Transporteinheit. Da der innere Abschlussdeckel 3 aus massivem Stahl geschmiedet ist, wird hier eine hinreichende Abschirmung gegenüber Gammastrahlen gewährleistet. Der Schutz gegen Neutronenstrahlung ist durch die beiden Stossdämpfer 5, 6 gegeben, die mit Balsa-Holz 20 gefüllt sind.

Die 24 gleichmässig verteilten Bolzen 16 sichern den inneren Abschlussdeckel 3 mittels des Ringflansches 15 auf dem Behälterkörper 1. Der obere Behälterdeckel 4 ist durch zwölf zusätzliche, ebenfalls gleichmässig verteilte Bolzen 17 gehalten. Zur Befestigung der Stossdämpfer 5, 6 dienen der Ringflansch 18 sowie acht weitere, gleichmässig verteilte Bolzen 19. Die Bolzen 16, 17, 19, die Ringflansche 15, 18 und der obere Deckel 4 sind aus rostfreiem Stahl hergestellt. Der innere Abschlussdeckel 3 seinerseits ist mit rostfreiem Stahlblech umhüllt.

In den Figuren 1 und 2 sind zwei Tragkörbe 2, 21 dargestellt, die in den Transportbehälter eingesetzt werden können. Der Tragkorb 2 gemäss Fig. 1 dient zur Aufnahme von sieben Brennelementen, währenddem der Tragkorb 21 gemäss Fig. 2 siebenzehn Brennelemente aufnehmen kann. Diese Tragkörbe 2, 21 weisen eine hohe innere Festigkeit auf und gewährleisten die Neutronenabschirmung für das gefahrlose Transportieren der Brennelemente. Auch die Tragkörbe sind so konstruiert, dass sie allen denkbaren Unfallsituationen standhalten.

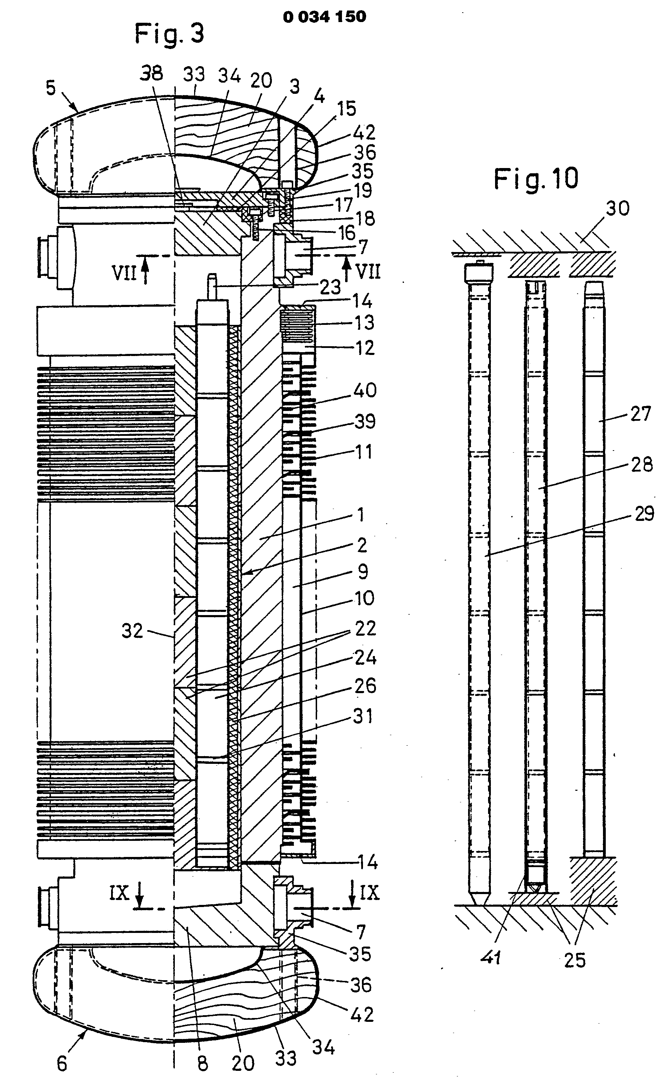

Normalerweise erfolgt der Transport der Brennelemente in trockenem Zustand. Die dazu vorgesehenen Trägkörbe 2, 21 bestehen aus dicken, aufeinander aufgesetzen, gegossenen Aluminiumscheiben 22, die durch rostfreie Bolzen 23 zusammengespannt sind. Zwischen der Innenwand des Behälters und den Aluminiumscheiben 23 ist ein zylindrischer Spalt vorgesehen, zur Berücksichtigung der thermischen Expansion. Im Innern der Trägkörbe 2, 21 sind längliche Brennstoffkanäle 24 aus rostfreiem Borstahl untergebracht. Ein Anteil von 1 Gewichtsprozent neutralem Bor dient zur Neutronenabsorption. Die Tragkörbe 2, 21 weisen ebenfalls untere Abstandsbegrenzungsplatten 25 (Fig. 10) für die Brennelemente auf. Zwischen den Kanälen 24 für die Brennelemente sind zylindrische Bohrungen 26 vorgesehen, in die ein Graphit/Bor-Karbidgemisch untergebracht ist, wobei letzteres durch rostfreie Stahlrohre umhüllt ist. Dieses Gemisch ist ebenfalls Bestandteil des Neutronenschirmes.

Die Brennelemente 27-29 können mit oder ohne einer Schutzumhüllung 41 transportiert werden. Falls der Transport ohne zusätzliche Schutzumhüllung erfolgt, müssen zusätzliche rostfreie Stahlkanäle an den unteren Abstandsbegrenzungsplatten 25 angeschweisst werden, die von unten in die Kanäle 24 eindringen.

Einer oder mehrerer der äusseren Borstahlkanäle 24 Können entfernbar im Tragkorb 2 untergebracht sein. Bei Entfernung dieser Kanäle 24 können Spezialschutzbehälter für schadhafte Brennelemente in den freien Hohlraum eingeschoben werden. Die übrigen, nicht entfernbaren Kanäle 24 sind an der oberen rostfreien Stahlplatte 30 des Tragkorbes 2 angeschweisst. Dadurch ist die freie, thermische Expansion nach unten gewährleistet.

Im Falle des Nasstransportes der Brennelemente werden dünnwandige Rohre aus Borstahl in die Kanäle 24 eingeschoben. Damit diese dünnwandigen Rohre nicht einknicken, sind im Abstand voneinander angeordnete Spreizringe 31 vorgesehen. In diesen Spreizringen 31 sind Oeffnungen ausgespart, damit das Wasser frei zirkulieren kann. Bei horizontaler Transportlage wird das Gewicht der Brennelemente durch die Spreizringe 31 aufgenommen.

Damit der Tragkorb 2, 21 geradlinig in den Transportbehälter eingeschoben werden kann und sich beim Transport nicht verdrehen oder verschieben kann, ist an seiner Aussenfläche eine Längsnut angeordnet, in die ein entsprechender Vorsprung an der Innenwand des Behälters eindringt.

Die Tragzapfen 7 dienen einerseits dazu, den Behälter für den Transport zu heben und anderseits um ihn auf einer Transportunterlage zu befestigen. Als Transportunterlage kann z. B. — eine Sattelvorrichtung dienen, die auf einem Transportschlitten aufgeschweisst ist. Die Tragzapfen 7 sind wegnehmbar in den Behälterkörper 1 eingeschraubt. Sie sind — mit Ausnahme ihrer inneren Abschnitte — deformierbar. Die zwei unteren Tragzapfen 7 sind bezüglich der Behälterachse 32 exzentrisch angeordnet. Dies hat den Zweck, beim Senken des Transportbehälters auf die Sattelvorrichtung dessen Kippen nach einer bestimmten Seite zu gewährleisten. Die Tragzapfen und die Bolzen sind aus rostfreiem Stahl hergestellt.

Die Stossdämpfer 5, 6 bestehen im wesentlichen aus einer dikken äusseren Schale 33, einer dünnen inneren Schale 34, einer Füllung aus Balsa-Holz 20 sowie aus einer Anzahl Röhren 36. Beide Schalen 33, 34 sind aussen an einen Ringflansch 35 angeschweisst. Der Flansch 35 dient der Zentrierung des Stossdämpfers beim Aufsetzen. Er ist am Behälterkörper 1 mittels der Befestigungsbolzen 19 befestigt. Die den Stossdämpfer 5 durchdringenden dickwandigen Röhren 36 sind an der äusseren Schale 33 und am Ringflansch 35 angeschweisst. Durch die Röhren 36 können die Bolzen 19 eingeschoben werden.

Falls der Transportbehälter in axialer Richtung nach unten fällt, wird beim Aufschlag die kinetische Energie durch folgende Elemente absorbiert :

— die nach aussen gewölbte, in der Draufsicht runde äussere Schale 33, die in Axialrichtung relativ weich und nachgiebig ist,

— die Füllung 20 aus Balsa-Holz, dessen Fasern parallel zur Behälterachse 32 ausgerichtet sind. Das Balsa-Holz vermag einen erheblichen Teil der kinetischen Energie zu absorbieren,

— die harten Röhren 36, die ihrerseits bei der Deformation etwa 50 % der Energie vernichten.

Bei einem seitlichen Fall des Transportbehälters wird die kinetische Energie einerseits durch den torusförmigen Teil 42 der äusseren Schale 33 aufgenommen, und anderseits durch die massiven Endrippen 14. Beide werden etwa gleichzeitig verformt und absorbieren etwa die gleiche Energiemenge. Die Absorptionskapazität des Balsa-Holzes ist bei seitlichem Fall vernachlässigbar infolge der erwähnten Faserorientierung.

Wenn der Transportbehälter schräg auf eine Kante stürzt, findet eine Kombination der Energieabsorption aus den beiden vorerwähnten Fällen statt, wobei je nach Aufprallwinkel das Balsa-Holz mehr oder weniger Energie absorbiert.

Die beschriebene Ausbildung des Transportbehälters gestattet eine gleichmässige Verzögerung und Energieabsorption in allen Richtungen, ohne nachteilige Verzögerungsspitzen, wie dies bei konventionellen Behältern mit nur deformierbaren Rippen festgestellt werden kann. Vorteilhaft ist auch die gleichmässige Verteilung der Deformationsarbeit auf der Aussenoberfläche des vorliegenden Transportbehälters. In Abhängigkeit von der Fallrichtung sind Verzögerungswerte von zwischen 30-40 g zu erwarten.

Im weiteren lässt sich feststellen, dass der Transportbehälter gegenüber Sprödbrüchen bei tiefen Temperaturen wenig empfindlich reagiert.

Auch die Tragzapfen 7 sind deformierbar gestaltet, und können ebenfalls kinetische Energie absorbieren, wenn sie bei einem seitlichen Fall des Behälters tirnseitig aufschlagen. Die äusseren Schalen 33 und alle Rohre 36 sind aus rostfreiem Stahl hergestellt. Der geschlossene Innenraum zwischen der inneren und der äusseren Schale ist hermetisch verschlossen, damit die Balsa-Holzfüllung keine Feuchtigkeit aufnehmen kann.

Wie vorstehend erwähnt worden ist, wird der Behälter zum Transport auf eine Sattelvorrichtung mit Schlitten horizontal positioniert. Dabei werden die Tragzapfen durch die Sattelvorrichtung unterstützt. Für den Schienentransport wird der Schlitten auf einem flachen Bahnwagen oder einem speziellen Brückenwagen montiert. Im ersten Fall hat die ganze Anordnung bestehend aus Schlitten, Behälter und Deckel die Abmessung eines Standardcontainers und kann daher ohne weiteres auch auf einem Schiff weitertransportiert werden. Bei der zweiten Transportmöglichkeit mit Brückenwagen liegt der Schwerpunkt tiefer, so dass höhere Geschwindigkeiten beim Transport erzielt werden können.

Der innere Hohlraum des Behälters ist zugänglich durch den inneren Abschlussdeckel 3, der durch den Ringflansch 15 niedergehalten ist, durch die zwei Ventile 37 und durch kleinere, verschliessbare Oeffnungen im Abschlussdeckel 3 zur Entnahme von Proben. Die Dichtheit des inneren Hohlraumes ist gewährleistet durch die beiden Ventile 37 sowie die metallischen O-Ringe zwischen dem Ringflansch 18 und dem inneren Verschlussdeckel 3 bzw. zwischen diesem Flansch 18 und der entsprechenden Dichtfläche des Behälterkörpers 1. Eine Probeentnahmeöffnung zur Kontrolle der Innenraumatmosphäre ist im Tragzapfen 38 des inneren Abschlussdeckels 3 angeordnet.

Der äussere Behälterraum ist vornehmlich durch den äusseren Behälterdeckel 4 und die Ventildeckel abgeschlossen. Zwischen dem äusseren Behälterdeckel 4 und dem Behälterkörper sind Kunststoff-O-Ringe angebracht, währenddem die Ventildeckel gegenüber den Ventilen mit metallischen O-Ringen abgedichtet sind. Sowohl im äusseren Deckel 4 als auch in den Ventildeckeln sind Probeentnahme- und Kontrollöffnungen vorgesehen. Diese dienen insbesondere dazu, die Dichtheit des Innenraumes zu überprüfen. Ein besonderer Vorteil der zweifachen Innenräume ist darin zu sehen, dass das Ventil zwischen den beiden Innenräumen ständig auf das Entweichen von radioaktivem Material überwacht werden kann.

Alle entfernbaren Teile im Behälterinnenraum, mit Ausnahme der gegossenen Aluminiumscheiben im Tragkorb, sind aus rostfreiem Stahl hergestellt oder mit einer Umhüllung aus einem rostfreien Stahlblech mindestens 3 mm B Dicke ummantelt. Der rostfreie Stahl ist resistent gegenüber folgenden Reinigungs- und Dekontaminierungsflüssigkeiten :

entmineralisiertes Wasser,
Salpetersäure,
Natronlauge und
Nitrofluorlösung mit 5 % Fluor.

Der untere Teil des Behälterinnenraumes kann über die unteren Ventile gereinigt werden.

Alle äusseren Behälteroberflächen, inkl. die Flüssigkeitspumpe, sind ebenfalls mit rostfreiem Stahlblech abgedeckt, mit Ausnahme des Bereiches mit den Kühlrippen. Bei nasser Entladung des Transportbehälters, wenn dieser in einen Entladeteich eingetaucht wird, wird der Kühlrippenbereich des Behälters mit einem besonderen Schild abgedeckt. Letztere besteht aus einer zylindrischen Mantel aus rostfreiem Stahl, der aufblasbare Gummidichtungen aufweist. Bevor nun der Transportbehälter in den Entladeteich untergetaucht wird, wird er senkrecht aufgestellt und mittels der unteren Tragzapfen 7 auf einer Grundplatte befestigt. Nun wird die rostfreie Stahlummantelung angebracht und mittels der aufblasbaren Gummidichtungen abgedichtet. Am unteren Ende der Ummantelung, dem Behälterventil gegenüber, ist ein entfernbarer Deckel angeordnet, damit Rohrleitungen mit dem Behälterventil verbunden werden können, auch wenn die Ummantelung bereits angebracht worden ist. Während dieser Operation kann das Ventil zwischen der oberen und unteren Dichtung bereits entleert werden, währenddem der Kühlrippenbereich immer noch von Wasser umgeben ist.

Beim eingetauchten Transportbehälter ist der Wasserdruck zwischen den beiden aufblasbaren Dichtungen an beiden Enden höher als ausserhalb, so dass kein Wasser des Entladeteiches in den Rippenraum eindringen kann. Die Rippen sind mit einer Epoxidharzfarbe angestrichen, die im Falle der radioaktiven Vergiftung eine leichte Reinigung und Entgiftung erlaubt.

Sobald die Ummantelung angebracht worden ist, muss die anfallende Wärme durch Kühlung des Rippenbereiches abgeführt werden. Es ist deshalb notwendig, Kühlwasseranschlüsse bei der Ummantelung vorzusehen.

Die Wärmeabführung des Behälters erfolgt durch Konvektion und Wärmeabstrahlung, hauptsächlich durch die Kühlrippen, da die beiden Stossdämpfer eine Wärmeisolation darstellen. Kleine Wärmemengen werden auch durch die Tragzapfen und die ungerippte Manteloberfläche abgegeben.

Bei einem Aufprall des Behälters, nach einem freien Fall oder bei einem Brand, wird mit dem Verlust des Wassers in der Ummantelung 10 gerechnet. Die leere Ummantelung 10 wirkt dann als isolierende Schicht und nur noch die im Innern angeordneten Kühlrippen 40 geben noch Wärme ab.

Die verschiedenen Unfallsituationen können durch Computersimulation untersucht werden. Auf diese Möglichkeiten wird hier nicht weiter eingegangen.

**Ansprüche**

1. Zylindrischer Behälter für den Transport bestrahlter Reaktorelemente, wobei am Behälter unten und oben doppelschalig ausgebildete abnehmbare, nach aussen gewölbte Stossdämpfer montiert sind, die mit einem energieabsorbierenden Material gefüllt sind, dadurch gekennzeichnet, dass die Stossdämpfer (5, 6) eine Torusform aufweisen, und dass im Innern derselben in Achsrichtung (32) verlaufende, deformierbare Rohre (36) angeordnet sind.

2. Behälter nach Anspruch 1, dadurch gekennzeichnet, dass eine äussere Schale (33) der Stossdämpfer (5, 6) dicker ist als eine innere Schale (34).

3. Behälter nach Anspruch 1, dadurch gekennzeichnet, dass er einen Aussenmantel (10) aufweist, der einen zylindrischen Ringraum umschliesst, welcher aus einem wassergefüllten Raum (9) und einem von diesem getrennten, gasgefüllten Expansionsraum (12) besteht, und dass im Expansionsraum (12) mindestens ein konzentrisch angeordneter metallischer Balg (13) untergebracht ist.

4. Behälter nach Anspruch 3, dadurch gekennzeichnet, dass der Ringraum an den Enden durch dicke, umlaufende Seitenrippen (14) abgeschlossen ist, und dass diese Rippen (14) zur Absorption von kinetischer Energie deformierbar sind.

5. Behälter nach Anspruch 1, dadurch gekennzeichnet, dass unten und oben am Behälter Tragzapfen (7) angeordnet sind, die zwecks Energieabsorption mindestens teilweise deformierbar sind.

6. Behälter nach Anspruch 2, dadurch gekennzeichnet, dass die Schalen (33, 34) aus rostfreiem Stahl bestehen, und dass ihre Ränder an einem ringförmigen Flansch (18) angeschweisst sind, der seinerseits mittels Bolzen (19) am Behälterkörper (1) befestigt ist.

7. Behälter nach den Ansprüchen 1 und 6, dadurch gekennzeichnet, dass die Rohre (36) dickwandig und an der äusseren Schale (33) sowie am Ringflansch (35) angeschweisst sind.

## Claims

1. A cylindrical container for the transportation of radiation-exposed reactor elements, removable, outwardly curved shock absorbers of double-shelled construction being mounted on the top and the bottom of the container and being filled with an energy-absorbing material, characterised in that the shock absorbers (5, 6) are of toroidal configuration, and that deformable tubes (36) extending in an axial direction (32) are disposed in the interior of the shock absorbers.

2. A container as claimed in claim 1, characterised in that an external shell (33) of the shock absorbers (5, 6) is thicker than an internal shell (34).

3. A container as claimed in claim 1, characterised in that it has an outer casing (10) enclosing a cylindrical annular chamber which comprises a water-filled chamber (9) and a gas-filled expansion chamber (12) which is separated therefrom, and that at least one concentrically disposed metal bellows (13) is accommodated in the expansion chamber (12).

4. A container as claimed in claim 3, characterised in that the ends of the annular chamber are closed by thick, continuous side ribs (14), and that these ribs (14) are deformable for the purpose of absorbing kinetic energy.

5. A container as claimed in claim 1, characterised in that lifting lugs (7) are disposed at the bottom and at the top of the container and are at least partially deformable for the purpose of energy absorption.

6. A container as claimed in claim 2, characterised in that the shells (33, 34) are made from rustproof stell, and that their rims are welded to an annular flange (18) which is turn secured to the container body (1) by means of bolts (19).

7. A container as claimed in claims 1 and 6, characterised in that the tubes (36) are thick-walled and are welded to the external shell (33) and also to the annular flange (35).

## Revendications

1. Conteneur cylindrique pour le transport d'éléments de réacteur irradiés, des amortisseurs de chocs amovibles, réalisés à double coquille et bombés vers l'extérieur étant montés en bas et en haut de ce conteneur et étant emplis d'une matière absorbant l'énergie, conteneur caractérisé par le fait que les amortisseurs de chocs (5, 6) ont une configuration toroïdale ; et par le fait que des tubes (36) déformables et orientés dans le sens de l'axe (32) sont disposés à l'intérieur desdits amortisseurs.

2. Conteneur selon la revendication 1, caractérisé par le fait qu'une coquille externe (33) des amortisseurs de chocs (5, 6) est plus épaisse qu'une coquille interne (34).

3. Conteneur selon la revendication 1, caractérisé par le fait qu'il présente un chemisage externe (10) renfermant une chambre annulaire cylindrique qui comprend un espace (9) empli d'eau et une chambre d'expansion (12) séparée dudit espace et emplie de gaz ; et par le fait qu'au moins un soufflet métallique (13) disposé concentriquement est logé dans cette chambre d'expansion (12).

4. Conteneur selon la revendication 3, caractérisé par le fait que l'espace annulaire s'achève, à ses extrémités, par d'épaisses nervures latérales périphériques (14) ; et par le fait que ces nervures (14) sont déformables pour absorber de l'énergie cinétique.

5. Conteneur selon la revendication 1, caractérisé par le fait que, en bas et en haut de ce conteneur, se trouvent des tenons de support (7) qui sont au moins partiellement déformables en vue d'absorber de l'énergie.

6. Conteneur selon la revendication 2, caractérisé par le fait que les coquilles (33, 34) consistent en de l'acier inoxydable ; et par le fait que leurs bords sont soudés à une bride annulaire (18) qui est fixée à son tour par des boulons (19) au corps (1) dudit conteneur.

7. Conteneur selon les revendications 1 et 6, caractérisé par le fait que les tubes (36) sont à parois épaisses et sont soudés à la coquille externe (33), ainsi qu'au collet annulaire (35).

Fig. 1

Fig. 2

Fig. 4

Fig. 5

Fig. 6

Fig. 7

Fig. 8

Fig. 9

# Fig. 3

# Fig. 10